# EUROPEAN PATENT APPLICATION

(11) **EP 1 612 465 A1**
(43) Date of publication of application: **04.01.2006**
(21) Application number: 05014051.6
(22) Date of filing: 29.06.2005
(51) Int. Cl.: F16L 19/10

(54) **Device for connecting pipes for pressurized fluids to a faucet and the like**

(30) Priority: 02.07.2004 IT MI20040322 U
(71) Applicant: Ghidini, Eleonora, 25060 Marcheno BS (IT); Zaccagni, Giovanni, 25060 Marcheno BS (IT)
(72) Inventor: Ghidini, Eleonora, 25060 Marcheno BS (IT); Zaccagni, Giovanni, 25060 Marcheno BS (IT)
(74) Representative: Modiano, Micaela Nadia

(57) **Abstract**

A device for connecting pipes for pressurized fluids to a faucet and the like, comprising a cone (1) which forms monolithically a body which provides a seat (2) for hermetic coupling to a faucet and the like and forms an inner tubular portion (10) and an outer tubular portion (11), which delimit the butting seat (12) of a pipe (5) to be connected to the faucet.

## Description

The present invention relates to a device for connecting pipes for pressurized fluids to a faucet and the like.

As is known, copper pipes in which a pressurized gas or liquid flows are currently connected by using brass cones which are typically formed in two parts, one whereof is arranged inside the pipe and the other one is arranged outside the pipe, providing a connection by mechanical deformation.

Although this type of solution is widely used, it has the drawback of not ensuring in all cases a perfect seal, since the seal is a direct function of the correct execution of the mechanical crimping deformation that provides the coupling at the end of the pipe.

Moreover, another problem arises from the fact that it is necessary to provide cones for each type of diameter and thickness of the pipe, since it is not possible at all to compensate for any size differences.

The aim of the invention is to eliminate the drawbacks described above by providing a device for connecting pipes for pressurized fluids to a faucet and the like that allows to provide a cone that can be connected easily to the end of the copper pipe, always providing the assurance of a correct and perfectly hermetic connection.

Within this aim, an object of the invention is to provide a device in which it is possible to provide the mechanical deformation of the cone in an extremely simple and rapid manner, with the assurance of correct execution of said deformation.

Another object of the present invention is to provide a device that thanks to its particular constructive characteristics is capable of giving the greatest assurances of reliability and safety in use.

Another object of the present invention is to provide a device for connecting pipes for pressurized fluids to a faucet and the like that can be easily obtained starting from commonly commercially available elements and materials and is further competitive from a merely economical standpoint.

This aim and these and other objects that will become better apparent hereinafter are achieved by a device for connecting pipes for pressurized fluids to a faucet and the like, according to the invention, characterized in that it comprises a cone which forms monolithically a body which provides a seat for hermetic coupling to a faucet and the like and forms an inner tubular portion and an outer tubular portion, which delimit the butting seat of a pipe to be connected to said faucet.

Further characteristics and advantages of the present invention will become better apparent from the detailed description of a device for connecting pipes for pressurized fluids to a faucet and the like, illustrated by way of non-limiting example in the accompanying drawings, wherein:
Figure 1 is a partially sectional perspective view of the cone;
Figure 2 is an exploded sectional view of the device;
Figure 3 is a sectional view of the device in the connected position.

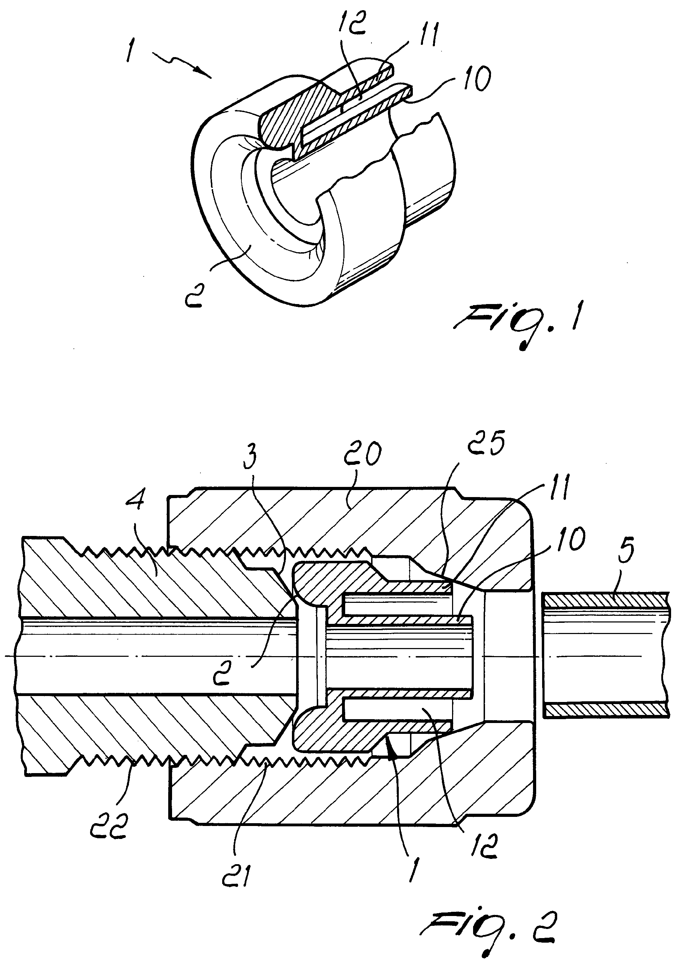

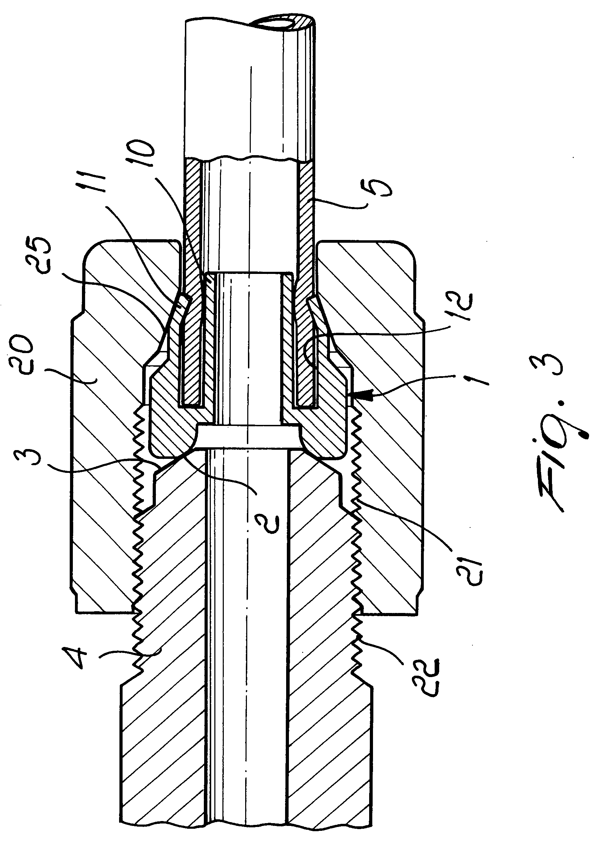

With reference to the figures, the device for connecting pipes for pressurized fluids to a faucet and the like, according to the invention, comprises a cone, generally designated by the reference numeral 1, which is formed monolithically and is made of brass and forms, at an axial end, a flared seat 2, which provides the coupling with the frustum-shaped end 3 of a tang 4, which can be connected to a faucet and the like with which the pipe 5 is to be associated; such pipe is generally made of copper, and gas and fluids under pressure are made to flow inside it.

The cone 1 forms, on the axial end that lies opposite the end provided with the flared coupling seat 2, an inner tubular portion 10 and an outer tubular portion 11, which are coaxial to each other and delimit between them a seat 12 for the butting of the pipe 5.

The radial width of the seat 12 is greater than the radial thickness of the pipe 5, so that it is possible to use pipes having a different thickness without thereby having to modify the cone.

Moreover, the inner tubular portion 10 protrudes axially with respect to the outer tubular portion 11.

In order to provide hermetic coupling, a ring 20 is provided which has an internal thread 21 for engaging an external thread 22 of the tang 4, so as to produce an axial translational motion, during tightening, for the ring 20.

The ring 20 has a frustum-shaped shoulder 25, which engages the outer tubular portion 11 so that when the ring 20 is tightened onto the tang 4, a radial compression of the outer tubular portion on the pipe. 5 is obtained, accordingly achieving a mechanical deformation for hermetic fixing of the cone 1 on the end of the pipe 5.

In this manner, a perfect hermetic seal is provided which gives the most absolute assurance against any infiltration.

The axial tightening of the ring 20 on the tang 4 also causes the axial coupling of the frustum-shaped abutment 3 against the flared seat 2, thus producing a localized deformation which allows to achieve a perfect seal of the cone 1 with respect to the tang 4 and accordingly with respect to the faucet connected thereto.

From what has been described above, it is therefore evident that the invention achieves the intended aim and objects, and in particular the fact is stressed that a monolithic cone is provided which can be coupled very easily to the end of the pipe 5, which can have a variable thickness, thanks to the fact that the seat 12 allows size adaptation within a certain range.

Moreover, the mechanical deformation that is provided occurs in a uniformly distributed manner, and therefore the tightening of the outer tubular portion on the pipe 5 is distributed circumferentially, obtaining deformation without damage of the tubular element and at the same time obtaining a perfect seal thanks to the fact that the pipe 5 is clamped both by the outer tubular portion 11 and on the inner tubular portion 10, thus providing in practice a double seal.

In practice, the materials used, so long as they are compatible with the specific use, as well as the contingent shapes and dimensions, may be any according to requirements.

The disclosures in Italian Utility Model Application No. MI2004U000322 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for connecting pipes for pressurized fluids to a faucet and the like, **characterized in that** it comprises a cone (1) which forms monolithically a body which provides a seat (2) for hermetic coupling to a faucet and the like and forms an inner tubular portion (10) and an outer tubular portion (11), which delimit the butting seat (12) of a pipe (5) to be connected to said faucet.

2. The device according to claim 1, **characterized in that** said coupling seat (2) is a flared seat arranged at an axial end of said body, for coupling to the frustum-shaped end (3) of a tang (4) connected to said faucet and the like.

3. The device according to one or more of the preceding claims, **characterized in that** said inner tubular portion (10) and said outer tubular portion (11) are provided on opposite sides of said body with respect to said coupling seat (2).

4. The device according to one or more of the preceding claims, **characterized in that** said seat (12) for the butting of said pipe (5) has a greater radial thickness than the radial thickness of said pipe (5) for adaptation to pipes having different thicknesses.

5. The device according to one or more of the preceding claims, **characterized in that** said inner tubular portion (10) protrudes axially with respect to said outer tubular portion (11).

6. The device according to one or more of the preceding claims, **characterized in that** it comprises a ring (20) with an internal thread (21), which can engage an external thread (22) of said tang (4) and forms a frustum-shaped shoulder (25), which can engage said outer tubular portion (11) for its radial compression on said pipe (5) to be connected.

7. The device according to one or more of the preceding claims, **characterized in that** said radial compression is adapted to provide a seal between the internal surface of said pipe (5) to be connected and the external surface of said inner tubular portion (10) and between the external surface of said pipe (5) to be connected and the internal surface of said outer tubular portion (11).
